# EUROPÄISCHE PATENTSCHRIFT

(11) **EP 2 300 210 B1**
(45) Veröffentlichungstag und Bekanntmachung des Hinweises auf die Patenterteilung: **24.10.2018**
(21) Anmeldenummer: 09757608.6
(22) Anmeldetag: 05.06.2009
(51) Int. Cl.: B29C 45/53, B29C 45/54, B29C 45/58, B29C 45/62

(54) **SPRITZEINHEIT**
INJECTION UNIT
UNITÉ D'INJECTION

(30) Priorität: 06.06.2008 DE 102008027051
(43) Veröffentlichungstag der Anmeldung: 30.03.2011
(73) Patentinhaber: KraussMaffei Technologies GmbH, 80997 München (DE)
(72) Erfinder: FRITZ, Hans Gerhard, 73066 Uhingen (DE); WIDMAYER, Stephan, 80997 München (DE); RAMM, Alexander, 71706 Markgröningen (DE)
(74) Vertreter: Wilhelm, Ludwig
(86) Internationale Anmeldenummer: PCT/EP2009/056912
(87) Internationale Veröffentlichungsnummer: WO 2009/147227

(56) Entgegenhaltungen:
- EP-A- 1 336 465
- WO-A-02/04184
- CH-A5- 595 207
- DE-A1- 19 538 255
- DE-B- 1 087 801
- JP-A- 7 156 228
- JP-A- 57 193 333
- JP-A- 2000 071 295
- US-A- 5 123 833
- WOBBE H ET AL: "SPRITZGIESSEN UND COMPOUNDIEREN KOMBINIERT DIE EINSPARUNG LIEGT AUF DER HAND" PLASTVERARBEITER, HUETHIG GMBH, HEIDELBERG, DE, Bd. 52, Nr. 2, 1. Februar 2001 (2001-02-01), Seiten 52-54, XP001003190 ISSN: 0032-1338

## Beschreibung

Die Erfindung betrifft eine Spritzeinheit gemäß dem Oberbegriff von Anspruch 1, insbesondere eine Spritzeinheit für eine Compounder-Spritzgießmaschine.

Aus dem Stand der Technik sind Compounder-Spritzgießmaschinen in verschiedenen Ausführungen bekannt. Gundsätzlich weisen Compounder-Spritzgießmaschinen eine Spritzeinheit mit einem Extruder zum Aufbereiten einer Kunststoffschmelze und ein Spritzaggregat zum Einspritzen der Kunststoffschmelze in ein Formwerkzeug auf. Der Extruder kann in vielfältiger Weise ausgebildet sein. Es kann sich beispielsweise um Ein- oder Doppelschnecken-Extruder handeln, wobei im letzteren Fall die Schnecken gleichsinnig oder gegensinnig rotieren können. Über eine oder mehrere Einfüllöffnungen können verschiedene Ausgangsmaterialien in den Extruder eingegeben und von diesem aufbereitet werden, beispielsweise Kunststoffgranulate, Fasermaterial und/oder Füllstoffe. In der Praxis haben sich gleichsinnig drehende Doppelschneckenextruder für Compoundieraufgaben bewährt.

Wenn der Extruder der Compounder-Spritzgießmaschine kontinuierlich betrieben werden soll, muss eine Adaption bzw. Synchronisierung des kontinuierlichen Aufbereitungsprozesses und des diskontinuierlichen Formgebungs- bzw. Spritzgießprozesses erfolgen.

Aus der EP1144174B1 ist eine Compounder-Spritzgießmaschine mit einem kontinuierlich betreibbaren Doppelschneckenextruder bekannt, wobei zwei Spritzaggregate vorgesehen sind, die abwechselnd mit Schmelze befüllt werden können, damit der Doppelscheckenextruder kontinuierlich betrieben werden kann. In den Ausführungsformen gemäß den Figuren 2 und 3 in der EP1144174 B1 sind die Schmelzewege und die Spritzaggregate so gestaltet, dass dort das als vorteilhaft angesehene sogenannte First-In-First-Out-Prinzip realisiert ist, nachfolgend auch FIFO-Prinzip genannt, d.h. die Schmelze gelangt aus dem Schneckenvorraum des Extruders in einer stetigen, nur in einer Richtung verlaufenden Strömung zur Einspritzdüse an dem Formwerkzeug. Bei der Befüllung der Spritzzylinder der Spritzaggregate findet keine Umkehr der Strömungsrichtung statt.

Eine weitere Compounder-Spritzgießmaschine mit kontinuierlich betreibbarem Extruder ist aus der EP1306187B1 bekannt. Im Unterschied zu dem zuvor genannten Stand der Technik wird nunmehr ein Zwischenspeicher zwischen dem Extruder und dem Spritzaggregat vorgesehen, um die von dem Extruder kontinuierlich bereitgestellte Schmelze während des Einspritzvorgangs aufnehmen zu können. Die Schmelze aus dem Zwischenspeicher gelangt - gegebenenfalls zusammen mit neuer Schmelze aus dem Extruder - beim nächsten Zyklus in den Spritzzylinder. Ein Sperrventil in dem Schmelzekanal von dem Zwischenspeicher zum Spritzzylinder ist in einer Dosierphase geöffnet, damit Schmelze von dem Extruder und dem Zwischenspeicher in den Spritzzylinder strömen kann, bis ein ausreichendes Schussvolumen an Schmelze bereitsteht. In der Einspritzphase befindet sich das Sperrventil in einer geschlossenen Stellung, so dass beim Einspritzvorgang keine Schmelze in den Zwischenspeicher oder den Extruder zurückgedrückt wird. Durch die doppelte Richtungsumkehr der Strömung sowohl in dem Zwischenspeicher als auch in dem Spritzzylinder geht man davon aus, dass auch hier das FIFO-Prinzip mehr oder weniger stark ausgeprägt ist.

Aus der US2950501 und der EP1333968B1 sind Spritzeinheiten mit einem Kolbenspritzaggregat bekannt, bei denen der Spritzkolben mit der Wand des Spritzzylinders einen ringförmigen Spalt bildet, über den Schmelze nach vorne in den Raum vor den Spritzkolben strömen kann. Die Zuführung der Schmelze erfolgt über spezielle Verteilerkanäle, insbesondere nach dem Pinolen-Prinzip, um den gesamten Ringraum möglichst gleichmäßig ausfüllen zu können. Wenn sich der Spritzkolben nach Beendigung eines Spritzgießzyklus in seiner vorderen Endposition bzw. Totpunktlage befindet, gelangt die Schmelze nach dem FIFO-Prinzip in den Raum vor dem Spritzkolben und verschiebt diesen nach hinten. Beim nächsten Hub des Spritzkolbens wird die zuerst in den Spritzzylinder geförderte Schmelze auch als erstes aus dem Spritzzylinder ausgetrieben. Bei diesen Kolbenspritzaggregaten ergibt sich aufgrund des Ringspalts eine vergleichweise große von Schmelze überströmte Oberfläche, was sich ungünstig im Hinblick auf das Durchspülen des Spritzaggregates auswirkt. Aufgrund der üblicherweise vorliegenden kleinen Querschnitte bei derartigen Ringspalten kommt es bei faserbeladenen Schmelzen zu einer Schädigung der Fasern.

Im Falle von Glasfasern beispielsweise werden diese gebrochen und die Stücke unnötig verkürzt, was sich nachteilig auf die Festigkeit des Formteils auswirkt.

Das Dokument DE19538255A1 offenbart eine Spritzeinheit mit einer kontinuierlichen Förderung der Schmelze, die jedoch keine Nuten aufweist.

Aus dem Dokument US5123833A ist eine Spritzeinheit gemäß dem Oberbegriff von Anspruch 1 bekannt.

Ausgehend von diesem Stand der Technik liegt der Erfindung die Aufgabe zugrunde, eine Spritzeinheit anzugeben, die sich durch verkürzte Verweilzeiten und ein verbessertes Spülverhalten auszeichnet und mit der Langfasern besonders schonend verarbeitet werden können. Eine weitere der Erfindung zugrundliegende Aufgabe besteht darin, eine verbesserte Spritzeinheit für eine Compounder-Spritzgießmaschine mit kontinuierlich arbeitender Plastifiziereinheit nach dem FIFO-Prinzip bereitzustellen.

Die Lösung der vorgenannten Aufgaben erfolgt durch eine Spritzeinheit mit den Merkmalen von Anspruch 1. Vorteilhafte Ausgestaltungen und Weiterentwicklungen dieser Spritzeinheit finden sich in den Unteransprüchen 2 bis 13
Dadurch, dass eine oder mehrere Nuten in der Innenwand des Spritzzylinders und/oder eine oder mehrere Nuten in dem Spritzkolben vorgesehen sind, kann man einerseits eine Schmelzeströmung nur in einer Richtung, d.h. nach dem FIFO-Prinzip realisieren und gleichzeitig können die Querschnitte der Nuten im Vergleich zu einer ringspaltförmigen Strömung vergleichsweise groß ausgelegt werden. Letzteres hat einen doppelten Vorteil, denn zum Einen ist die von Schmelze durchströmte Oberfläche kleiner als bei einem Ringspalt mit vergleichbarer Querschnittsfläche und zum Anderen werden in der Schmelze vorhandene Fasern weniger geschädigt, da eine größere durchströmbare Querschnittsfläche zur Verfügung steht.

Die Nuten in der Innenwand des Spritzzylinders sind in geeigneter Weise mit einer in dem Spritzzylinder vorgesehenen Öffnung zur Schmelzezufuhr (Spritzzylinder-Einlassöffnung) verbunden und verlaufen in Richtung des vorderen Endes des Spritzzylinders, wobei sie sich vorzugsweise von der Spritzzylinder-Einlassöffnung mindestens bis zur vorderen Totpunktlage des Spritzkolbens erstrecken.

Die Nuten in dem Spritzkolben verlaufen von dessen vorderem Ende nach hinten. Sie erstrecken sich vorzugsweise mindestens über den maximalen Hub des Spritzkolbens und bis zur Spritzzylinder-Einlassöffnung.

Die Nuten in dem Spritzzylinder und/oder die Nuten in dem Spritzkolben können im wesentlichen parallel zur Längsachse von Spritzzylinder und Spritzkolben verlaufen, d.h. sie können als Längsnuten ausgebildet sein, die parallel zur Längsachse von Spritzzylinder und Spritzkolben liegen. Falls mehrere Nuten in der Innenwand des Spritzzylinders und/oder in dem Spritzkolben vorgesehen werden sollen, können diese äquidistant über den Umfang verteilt angeordnet werden. Dadurch wird sichergestellt, dass keine Querkräfte auf den Spritzkolben wirken, wenn Schmelze durch die Nuten strömt. Die Nuten in dem Spritzzylinder und/oder die Nuten in dem Spritzkolben können aber auch wendelförmig um die Längsachse von Spritzzylinder und/oder Spritzkolben verlaufen, wobei vorzugsweise vom Beginn der Nut bis zu deren Ende nur etwa eine bis zwei Umdrehungen oder aber auch weniger als eine Umdrehung vorliegt. Dieser wendelförmige Verlauf der einen oder der mehreren Nuten trägt ebenfalls dazu bei, Querkräfte auf den Spritzkolben zu vermeiden, wenn Schmelze durch die eine wendelförmige Nut oder durch die mehreren wendelförmigen Nuten strömt. Somit wird von vorneherein das Auftreten von Querkräften vermieden. Ferner kann sich durch den wendelförmigen Verlauf der einen Nut oder der mehreren Nuten eine bessere Schmierung des Spritzkolbens ergeben, wenn dieser in dem Spritzzylinder vor- und zurückbewegt wird. Gegebenenfalls können auch mehrere derartiger wendelförmiger Nuten im Spritzzylinder und/oder im Spritzkolben vorhanden sein. Im Bedarfsfalle können wendelförmige Nuten im Spritzkolben und Längsnuten im Spritzzylinder miteinander kombiniert werden und umgekehrt.

In Weiterbildung der Erfindung kann darüberhinaus vorgesehen werden, dass an dem vorderen Ende des Spritzkolbens eine oder mehrere schräge Flächen vorgesehen sind, wobei das in Spritzrichtung hinten liegende Ende einer schrägen Flächen im Bereich einer Nut liegt. Die in dieser Nut zum vorderen Ende des Spritzkolbens strömende Schmelze kann somit über eine schräge Fläche barrierefrei in den Raum vor dem Spritzkolben fließen, was sich vorteilhaft auf das Spülverhalten des Kolbenspritzaggregats auswirkt. Die dem vorderen Ende des Spritzkolbens gegenüberliegende Wand des Spritzzylinders kann so ausgebildet sein, dass sie ebenfalls schräge Flächen aufweist, die parallel zu den schrägen Flächen des vorderen Endes des Spritzkolbens liegen. Im Idealfall können die schrägen Flächen des Spritzkolbens und die schrägen Flächen des Spritzzylinders aneinanderliegen, wenn der Spritzkolben bis auf Anschlag an das vordere Ende des Spritzzylinders herangefahren wird. Wenn genau eine Nut in der Innenwand des Spritzzylinders oder in dem Spritzkolben vorgesehen ist, kann die schräge Fläche von der Nut bis zum diametral gegenüberliegenden Seite des Spritzkolbens verlaufen, d.h. die gesamte Stirnfläche des Spritzkolbens ist eine geneigte bzw. schräge Fläche. Das vordere Ende des Spritzzylinders kann eine parallel dazu ausgebildete schräge Fläche aufweisen. Im Falle mehrere Nuten können die schrägen Flächen in geigneter Weise zusammenlaufen bzw. aneinanderstoßen; dies kann beispielsweise in der Weise erfolgen, dass die schrägen Flächen nach vorne spitz zulaufen und sich nach Art einer Pyramide in einem Punkt treffen. Gegebenenfalls können auch Abrundungen an den Kanten der Flächen vorgesehen werden.

Die erfindungsgemäße Spritzeinheit weist einen Zwischenspeicher auf, der im wesentlichen nach dem gleichen Prinzip wie das Kolbenspritzaggregat gestaltet ist, d.h. auch in dem Zwischenspeicher sind eine oder mehrere Nuten in der Innenwand des Zylinders des Zwischenspeichers, d.h. in dem Speicherzylinder, und/oder in dem Kolben des Zwischenspeichers, d.h. in dem Speicherkolben, vorgesehen. Auf diese Weise kann das FiFo-Prinzip durchgehend von der Plastifiziereinrichtung bis zum Austritt der Schmelze aus dem Spritzzylinder aufrechterhalten werden. Die Verwendung eines Zwischenspeichers ermöglicht einen kontinuierlichen Betrieb der Plastifiziereinrichtung. Die Plastifiziereinrichtung ist vorzugsweise als Extruder mit einer oder mehreren drehangetriebenen Plastifizierschnecken ausgebildet. Insbesondere kann als Plastifiziereinrichtung ein Doppelschneckenextruder mit zwei gleichsinnig drehenden Plastifizierschnecken vorgesehen sein.

Erfindungsgemäß ist eine einzige Nut in der Innenwand des Speicherzylinders oder in dem Speicherkolben vorgesehen. Außerdem ist am vorderen Ende des Speicherkolbens eine schräge Fläche analog den oben genannten schrägen Flächen beim Spritzkolben vorgesehen , um die damit verbundenen Vorteile auch beim Zwischenspeicher auszunutzen. Gleiches gilt für die Ausbildung einer dazu parallelen schrägen Fläche am vorderen Ende des Speicherzylinders.

Die Schmelze kann vom Zwischenspeicher in den Spritzzylinder durch einen von der Speicher-Auslassöffnung zur Spritzzylinder-Einlassöffnung verlaufenden im wesentlichen zylindrischen Schmelzekanal gelangen, wobei in Weiterbildung der erfindungsgemäßen Spritzeinheit die Zylinderachse des Schmelzekanals von der Zylinderachse des Speicherzylinders beabstandet sein kann. Zwischen dem Zwischenspeicher und dem Spritzzylinder ist an geeigneter Stelle ein Sperrventil vorgesehen, mit dem der Schmelzekanal abgesperrt werden kann (Schließstellung des Sperrventils), insbesondere während des Einspritzvorgangs und mit dem der Schmelzekanal freigegeben werden kann (Offenstellung des Sperrventils), insbesondere während des Auffüllens des Spritzzylinders mit Schmelze, also während der Dosierphase.

In bevorzugter Ausführungsform ist dabei vorgesehen, dass die Querschnittsfläche des Schmelzekanals innerhalb der Querschnittsfläche des Speicherkolbens liegt und die den zylindrischen Schmelzekanal begrenzende Wand und die den Speicherzylinder begrenzende Wand auf einer Linie liegen. Wenn nur eine einzige Nut in der Innenwand des Speicherzylinders oder in dem Speicherkolben vorgesehen ist, kann die Speicherzylinder-Auslassöffnung diametral zum vorderen Ende der Nut angeordnet sein. Dies wirkt sich insbesondere bei Vorhandensein einer schrägen Stirnfläche des Speicherkolbens günstig auf das Spülverhalten aus.

In analoger Weise kann der von einer Spritzzylinder-Auslassöffnung ausgehende und zu einer Spritzgießform gehende Schmelzekanal (Schmelze-Einspritzkanal) mit seiner Achse ausserhalb der Zylinderachse des Spritzzylinders angeordnet werden.

In der Regel ist der Spritzkolben ausschließlich linear angetrieben und ansonsten drehfest. Im Bedarfsfalle kann der Spritzkolben aber sowohl linear verfahren als auch drehangetrieben werden, insbesondere wenn der Spritzkolben über eine oder mehrere wendelförmige Nuten verfügt. Der Spritzkolben kann aber auch als Schubschnecke ausgebildet sein. Die Nuten bilden sozusagen die Schneckengänge der Schnecke. Diese Schubschnecke ist sowohl linear verfahrbar mittels eines Linearantriebs als auch drehantreibbar mittels eines Drehantriebs.

Nachfolgend soll die Erfindung anhand von Ausführungsbeispielen und unter Bezugnahme auf die Figuren 1 bis 8 näher erläutert werden. Es zeigen:
- Fig. 1: schematische Darstelltung einer Compounder-Spritzgießmaschine;
- Fig. 2: vergrößerte und perspektivische Darstellung von Zwischenspeicher und Kolbenspritzaggregat;
- Fig. 3: Schnitt durch den Speicherzylinder entlang der Line A-A mit Blickrichtung gemäß Pfeil P1;
- Fig. 4: Schnitt durch den Spritzzylinder entlang der Linie B-B mit Blickrichtung gemäß Pfeil P2;
- Fig. 5: einen Querschnitt durch einen Speicher- bzw Spritzzylinder in einer weiteren Ausführungsform;
- Fig. 6: einen Querschnitt durch einen Speicher- bzw. Spritzkolben in einer weiteren Ausführungsform;
- Fig. 7a: schematische Darstellung des Schmelzestroms im Zwischenspeicher zu Beginn des Füllvorgangs;
- Fig. 7b: schematische Darstellung des Schmelzestroms im Zwischenspeicher während des Füllvorgangs;
- Fig.8: schematische Darstellung einer weiteren Ausführungsform einer erfindungsgemäßen Spritzeinheit.

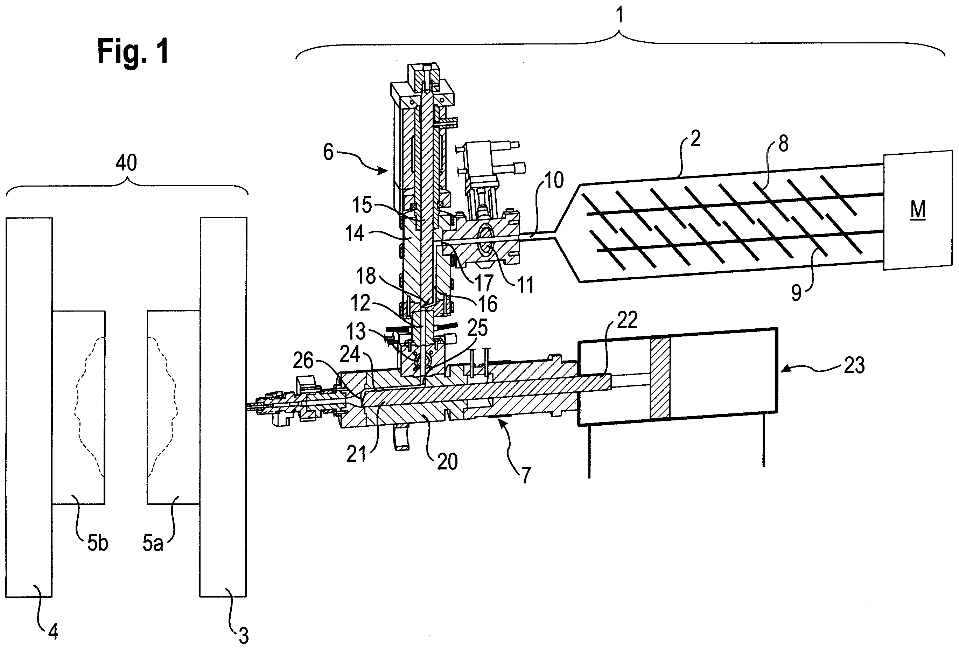

Figur 1 zeigt schematisch eine Compounder-Spritzgießmaschine mit einer erfindungsgemäßen Spritzeinheit 1 und einer Schließeinheit 40. Die Schließeinheit 40 ist ihrerseits nur schematisch dargestellt und umfasst eine feststehende Formaufspannplatte 3 und eine bewegliche Formaufspannplatte 4 sowie an sich bekannte Mittel zum Verfahren der beweglichen Formaufspannplatte 4 sowie zum Erzeugen einer Schließkraft. Mittels Formhälften 5a und 5b können geeignete Kavitäten für die Herstellung von Formteilen gebildet werden. Die Spritzeinheit 1 umfasst eine Plastifiziereinrichtung 2 zur Erzeugung einer Schmelze, einen Zwischenspeicher 6 sowie ein Kolbenspritzaggregat 7 zur Aufnahme der von der Plastifiziereinheit 2 erzeugten Schmelze und zum Einspritzen dieser Schmelze in die Form 5a, 5b. Hierzu weist das Kolbenspritzaggregat 7 ein Hubvolumen auf, mit dem die Form 5a, 5b mindestens einmal befüllt werden kann. Als Plastifiziereinrichtung 2 ist vorliegend ein Doppelschneckenextruder vorgesehen mit zwei gleichsinnig drehenden und in axialer Richtung ortsfesten Schnecken 8 und 9, die von einem Motor M drehangetrieben werden. Anstelle des hier beschriebenen Doppelschneckenextruders mit zwei gleichsinnig drehenden Schnecken können auch andere Arten von Extrudern zur Erzeugung der Schmelze vorgesehen werden, wie sie für sich genommen aus dem Stand der Technik bekannt sind. Von dem vorderen Ende des Doppelschneckenextruders verläuft eine erste Schmelzeleitung 10 mit einem ersten Sperrventil 11 zu dem Zwischenspeicher 6. Von dem unteren Ende des Zwischenspeichers 6 verläuft eine zweite Schmelzeleitung 12 mit einem zweiten Sperrventil 13 zum Kolbenspritzaggregat 7.

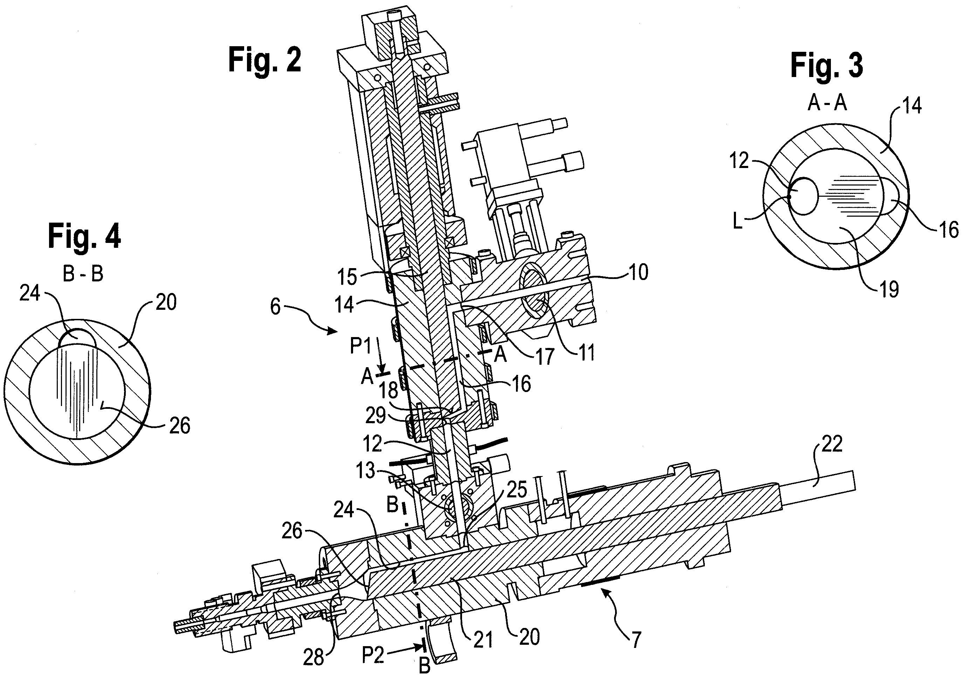

Wie den Figuren 1 und 2 zu entnehmen ist, umfasst der Zwischenspeicher 6 einen Speicherzylinder 14 und einen darin reversierbar geführten Speicherkolben 15. Der Speicherkolben 15 kann also zwischen einer vorderen und einer hinteren Position linear verfahren werden. Nicht dargestellt sind die Antriebsmittel zum Verfahren des Speicherkolbens 15 in dem Speicherzylinder 14. Der Speicherzylinder 14 weist eine Speicher-Einlassöffnung 17 auf, durch die von der Plastifiziereinrichtung 2 erzeugte Schmelze in den Speicherzylinder 14 einströmen kann, sowie eine davon beabstandete Speicher-Auslassöffnung am vorderen Ende des Speicherzylinders 14, durch die die Schmelze mittels des Speicherkolbens 15 aus dem Speicherzylinder 14 herausgedrückt werden kann. Der Speicherkolben 15 liegt dicht aber verschieblich an der Innenwand des Speicherzylinders 14 an. In der in der Figur 1 gezeigten Stellung befindet sich der Speicherkolben 15 in seiner vorderen Totpunktlage. In der Innenwand des Speicherzylinders sind eine oder mehrere Nuten 16 vorgesehen, die mit der Speicher-Einlassöffnung 17 verbunden sind und in Richtung des vorderen Endes des Speichezylinders verlaufen. Man kann diese Nuten auch als Längsnuten bezeichnen. Im dargestellten Beispiel ist eine einzige Nut 16 vorgesehen, die sich von der Speicherzylinder-Einlassöffnung 17 bis zum vorderen Ende des Speicherzylinders erstreckt und parallel zur Längsachse des Speicherzylinders liegt. Der Speicherkolben 15 weist an seinem vorderen Ende eine schräge Fläche 18 auf, wobei das in Fließrichtung der Schmelze gesehen hinten liegende Ende dieser schrägen Fläche im Bereich der Nut 17 und das diametral gegenüberliegende Ende dieser schrägen Fläche im Bereich des Schmelzekanals 12 liegt. Dort liegt auch die Speicherzylinder-Auslassöffnung 29, über die die Schmelze in den Schmelzekanal 12 gelangt. Der Schmelzekanal 12 liegt somit nicht koaxial zur Zylinderachse des Speicherzylinders, sondern die Zylinderachse des Schmelzekanals 12 ist von der Zylinderachse des Speicherzylinders 14 beabstandet. In dem hier dargestellten Beispiel ist der Schmelzekanal 12 in der Weise zum Speicherzylinder 14 angeordnet, dass sich die Querschnittsfläche des Schmelzekanals 12 innerhalb der Querschnittsfläche des Speicherkolbens 14 befindet und die den zylindrischen Schmelzekanal 12 begrenzende Wand und die Innenwand des Speicherzylinders 14 auf einer Linie liegen.

Das Kolbenspritzaggregat 7 umfasst einen Spritzzylinder 20 und einen darin reversierbar geführten Spritzkolben 21. Der Spritzkolben 21 kann also zwischen einer vorderen und einer hinteren Position linear verfahren werden. Für den Antrieb des Spritzkolbens ist dieser antriebstechnisch mit der Kolbenstange 22 einer hydraulischen Kolben-Zylinder-Einheit 23 verbunden. In den Figuren 1 und 2 ist der Spritzkolben 21 in einer Stellung gemäß der vorderen Totpunktlage dargestellt. Der Spritzzylinder 20 weist eine Spritzzylinder-Einlassöffnung 25 auf, durch die von der Plastifiziereinrichtung 2 erzeugte Schmelze in den Spritzzylinder 20 einströmen kann sowie eine davon beabstandete Spritzzylinder-Auslassöffnung 28 am vorderen Ende des Spritzzylinders 20, durch die die Schmelze mittels des Spritzkolbens 21 aus dem Spritzzylinder 20 herausgedrückt und in das Formwerkzeug 5a, 5b verdrängt werden kann. Der Spritzkolben 21 liegt dicht aber verschieblich an der Innenwand des Spritzzylinders 20 an. In der Innenwand des Spritzzylinders 20 sind eine oder mehrere Nuten 24 vorgesehen, die mit der Spritzzylinder-Einlassöffnung 25 verbunden sind und in Richtung des vorderen Endes des Spritzzylinders 20 verlaufen (Längsnuten). In dem dargestellten Beispiel erstreckt sich die eine Längsnut 24 von der Spritzzylinder-Einlassöffnung 25 bis zum vorderen Ende des Spritzzylinders und liegt parallel zur Längsachse des Spritzzylinders. Der Spritzkolben 15 weist an seinem vorderen Ende eine schräge Fläche 26 auf, wobei das in Fließrichtung der Schmelze gesehen hinten liegende Ende dieser schrägen Fläche im Bereich der Nut 24 liegt. Über eine Spritzzylinder-Auslassöffnung 28 kann die Schmelze aus dem Spritzzylinder 20 herausbewegt werden.

Die Figur 3 zeigt einen Schnitt durch den Speicherzylinder 14 entlang der Linie A-A und zwar bei zurückgezogenem Speicherkolben 15 und mit Blick in Richtung des Pfeils P1, so dass der Boden 19 des Speicherzylinders 14 mit der Speicherzylinder-Auslassöffnung 29 und die von dort ausgehende Schmelzeleitung 12 zu sehen sind. Der Boden 19 ist als schräge Fläche ausgeführt, wie dies aus der Figur 2 ersichtlich ist und zwar in der Weise, dass die schräge Stirnfläche 18 des Speicherkolbens 15 und die Bodenfläche 19 des Speicherzylinders 14 im wesentlichen parallel zueinander liegen. Die Nut 16 ist im Querschnitt im wesentlichen halbkreisförmig ausgebildet; es können aber auch andere Querschnitte vorgesehen werden. Die den zylindrischen Schmelzekanal 12 begrenzende Wand und die Innenwand des Speicherzylinders 14 liegen auf einer Linie L.

Die Figur 4 zeigt einen Schnitt durch den Spritzzylinder 20 entlang der Linie B-B und zwar bei zurückgezogenem Spritzkolben 21 und mit Blick in Richtung des Pfeils P2, so dass man auf die Stirnfläche 26 des Spritzkolbens 21 blickt. Die Stirnfläche 26 ist als schräge Fläche ausgeführt, wie dies aus der Figur 2 ersichtlich ist.

Gegebenenfalls kann der von der Spritzzylinder-Auslassöffnung 28 ausgehende und zur Spritzgießform 5a,5b gehende Schmelzekanal (Schmelze-Einspritzkanal 30) mit seiner Achse ausserhalb der Zylinderachse des Spritzzylinders 21 angeordnet sein und zwar in der Weise, dass die schräge Stirnfläche 26 des Spritzkolbens 21 und die dieser gegenüberliegende Bodenfläche des Spritzzylinders 20 im wesentlichen parallel zueinander liegen. Der Schmelze-Einspritzkanal 30 liegt dann nicht koaxial zur Zylinderachse des Spritzzylinders, sondern die Zylinderachse des Schmelze-Einspritzkanals 30 ist von der Zylinderachse des Spritzzylinders 20 beabstandet. So wie beim Zwischenspeicher kann vorliegend der Schmelze-Einspritzkanal 30 in der Weise zum Spritzzylinder 14 angeordnet sein, dass sich die Querschnittsfläche des Schmelze-Einspritzkanals 12 innerhalb der Querschnittsfläche des Spritzkolbens 14 befindet und die den Schmelze-Einspritzkanal 30 begrenzende Wand und die Innenwand des Spritzzylinders 20 können auf einer Linie liegen.

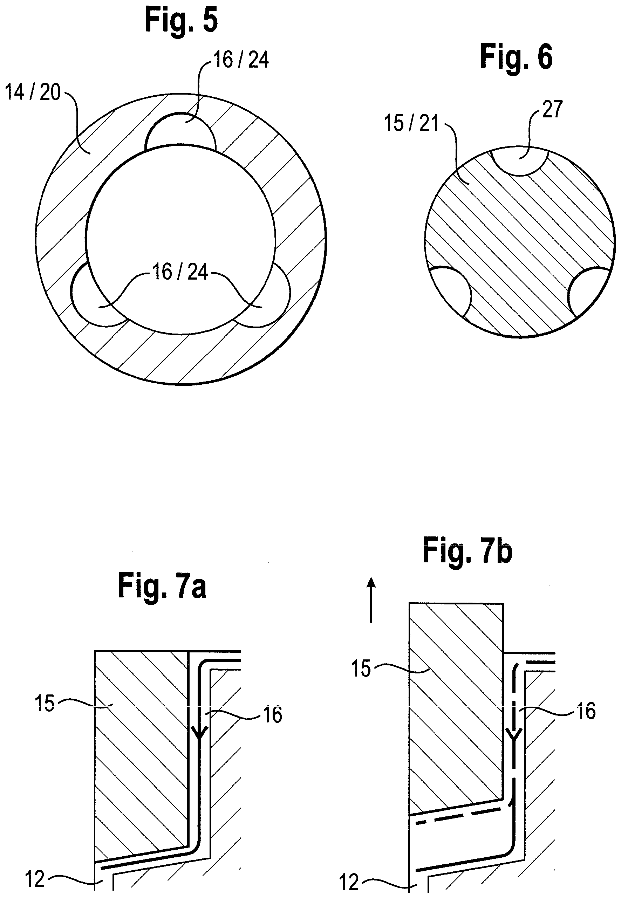

Die Figur 5 zeigt einen Schnitt durch einen Speicherzylinder 14 bzw. einen Spritzzylinder 20 in einer weiteren Ausführungsform. Wie der Figur 5 zu entnehmen ist, können in dem Speicherzylinder 14 und/oder dem Spritzzylinder 20 auch mehrere Nuten 16 bzw. 24 vorgesehen sein, die vorzugsweise äquidistant zueinander über den Umfang der Innenwand von Speicher- bzw. Spritzzylinder verteilt angeordnet sind und im wesentlichen parallel zur Längsachse des Speicherzylinders bzw. des Spritzzylinders verlaufen. Diese Nuten können auch als Längsnuten bezeichnet werden.

Die Figur 6 zeigt einen Schnitt durch einen Speicherkolben 15 bzw. einen Spritzkolben 21 in einer weiteren Ausführungsform. Wie der Figur 6 zu entnehmen ist, können auch eine oder mehrere Nuten 27 in dem Speicherkolben 15 und/oder in dem Spritzkolben 21 vorgesehen sein, wobei bei mehreren Nuten diese vorzugsweise äquidistant über den Umfang verteilt in dem Speicherkolben bzw. dem Spritzkolben angeordnet sind und im wesentlichen parallel zur Längsachse des Speichekolbens bzw. des Spritzkolbens verlaufen. Diese Nuten können auch als Längsnuten bezeichnet werden.

Die Nut oder die Nuten können nur in den Zylindern 14, 20 oder nur in den Kolben 14, 21 vorgesehen sein. Es können aber auch in beiden Bauteilen Nuten vorhanden sein.

Insbesondere im Falle mehrerer über den Umfang verteilter Längsnuten können geeignete (hier nicht explizit dargestellte) Schmelzeverteilerkanäle vorgesehen werden, mittels derer die ankommende Schmelze möglichst gleichmäßig auf Längsnuten verteilt werden kann. Zur Verteilung der Schmelze auf die Längsnuten kann insbesondere eine Ringnut im Zylinder und/oder eine Ringnut im Kolben vorgesehen sein, wobei die jeweilige Ringnut die Funktion eines Schmelzeverteilerkanals hat und die ihr zugeordneten Längsnuten strömungstechnisch miteinander verbindet.

Anstelle von Längsnuten können auch wendelförmig verlaufende Nuten vorgesehen werden. In dem oben beschriebenen Ausführungsbeispiel könnten die Nuten 16, 24, und/oder 27 also auch wendelförmig um die Längsachse von Speicherzylinder/-kolben bzw. Spritzzylinder/-kolben herum verlaufen. Die Nuten sollen möglichst nur eine bis zwei Umdrehungen oder auch weniger als eine Umdrehung über die gesamte Länge von Zylinder bzw. Kolben aufweisen. Bei einer höheren Anzahl von Windungen, insbesondere bei einer Vielzahl von Windungen (zum Beispiel mehr als fünf) könnten sich aufgrund der reinen Linearbewegung des Spritzkolbens Probleme in der Schmelzströmung ergeben und es kann zu unerwünschten Ablagerungen kommen.

In den Figuren 7a und 7b ist schematisch die Realisierung des FIFO-Prinzips bei der erfindungsgemäßen Spritzeinheit dargestellt, wobei in der Figur 7a die Situation vor dem Befüllen des Speicherzylinders 14 und in der Figur 7b die Situation während des Befüllens des Speicherzylinders 14 gezeigt ist. Die später zugeführte Schmelze - angedeutet durch die gestrichelte Linie in der Figur 7b - legt sich auf die schon vorhandene Schmelze (siehe durchgezogene Linie) obendrauf. Wenn der Speicherkolben 14 wieder nach vorne bewegt wird, wird die zuerst in den Zwischenspeicher eingegebene Schmelze auch zuerst in den Schmelzekanal 12 und nachfolgend in den Spritzzylinder 20 bewegt. Gleichzeitig wird die Kolbenoberfläche sehr effektiv umspült bzw. gereinigt.

Nach dem gleichen Prinzip erfolgt die Befüllung und die Entleerung des Spritzzylinders. Nach Beendigung eines Spritzvorgangs befindet sich der Spritzkolben 21 in seiner vorderen Totpunktlage, vergleichbar mit der Darstellung in der Figur 7a. Über die Nut oder Nuten 24 wird Schmelze nach vorne in den Raum vor den Spritzkolben 21 bewegt, so dass sich dort ein Druck aufbauen kann, der ein Verfahren des Spritzkolbens 21 nach hinten bewirkt. Die nachfolgende über die Nut 24 einströmende Schmelze lagert sich hinter der zuerst ankommenden Schmelze an, vergleichbar mit der Darstellung in der Figur 7b. Bei der Bewegung des Spritzkolbens 21 nach hinten kann über die Kolben-Zylinder-Einheit 23 der Druck in dem Raum vor dem Spritzkolben geregelt werden.

Die Betriebsweise der Compounder-Spritzgießmaschine kann in bekannter Art und Weise erfolgen, wie dies beispielsweise in der EP1306187B1 näher beschrieben ist, wobei aufgrund der erfindungsgemäß gestalteten Spritzeinheit ein unidirektionaler Schmelzestrom von dem Extruder bis zum Formwerkzeug sichergestellt ist. Die Figuren 1 und 2 zeigen das Kolbenspritzaggregat 7 in einer Situation nach erfolgter Einspritzung und unmittelbar zu Beginn der Dosierphase. Während des Betriebs befindet sich der Speicherkolben 15 in dieser Phase in der Regel nicht in einer vorderen Endposition wie dies vorliegend dargestellt ist, sondern in einer zurückgezogenen Position, da während des Einspritzvorgangs kontinuierlich Schmelze von dem Doppelschneckenextruder 2 erzeugt wird und diese in dem Speicherzylinder 14 zwischengespeichert wird. Der Spritzkolben 26 befindet sich in einer vorderen Endposition und das Sperrventil 13 ist geöffnet. Die von dem Extruder 2 kontinuierlich erzeugte Schmelze sowie Schmelze aus dem Zwischenspeicher 6 können über den Schmelzekanal 12 und die Nut 24 in den Raum vor dem Spritzkolben 21 strömen. Der sich dabei vor dem Spritzkolben 21 aufbauende Druck bewirkt eine Rückwärtsbewegung des Spritzkolbens 21, welche durch die Kolben-Zylinder-Einheit 23 in geeigneter Weise beeinflusst werden kann, um den Druck im Raum vor dem Spritzkolben 21 auf einem bestimmten Niveau zu halten. Am Ende der Dosierphase befindet sich der Spritzkolben 21 in einer hinteren Endposition entsprechend dem gewünschten Schussgewicht bzw. entsprechend dem gewünschten Volumen an Schmelze, wie es zur Befüllung der Form 5a,5b erforderlich ist. Nunmehr kann das Sperrventil 13 geschlossen und der Einspritzvorgang gestartet werden. Der Spritzkolben 21 wird mittels der Kolben-Zylinder-Einheit 23 nach vorne verfahren und die davor befindliche Schmelze in die Form 5a,5b eingespritzt und das gewünschte Formteil hergestellt. Anschließend kann der nächste Dosiervorgang beginnen und der Zyklus wiederholt sich. Die während des Einspritzvorgangs von dem Doppelschneckenextruder kontinuierlich erzeugte Schmelze wird in dem Zwischenspeicher aufgenommen und beim nächsten Dosiervorgang ausgetragen. Der Spritzkolben 21 ist ausschießlich linear angetrieben und ansonsten drehfest, d.h. es findet keine rotatorische Relativbewegung von Spritzkolben 21 und Spritzzylinder 20 statt.

Während des Einspritzvorgangs verbleibt in der Nut oder - im Falle mehrerer Nuten - in den Nuten im Spritzzylinder Schmelze, die nicht in die Form 5a, 5b eingespritzt wird ("alte" Schmelze). Diese "alte" Schmelze wird beim nächsten Dosiervorgang von der in die Nut bzw. Nuten nachströmenden neuen Schmelze ausgewischt und gelangt zusammen mit der "alten" Schmelze in den Schmelzesammelraum vor den Einspritzkolben. Bei jedem Dosiervorgang wird somit "alte" Schmelze aus dem vorangegangenen Einspritzvorgang aus der bzw. den Nuten ausgewischt, mit neuer Schmelze vermischt und im nachfolgenden Einspritzvorgang aus dem Spritzzylinder ausgetrieben. Für die in dem Speicherzylinder befindlichen Nuten gilt sinngemäß das Gleiche, d.h. die während des Ausdrückens von Schmelze aus dem Zwischenspeicher 6 in den Nuten des Speicherzylinders verbleibende Schmelze ("alte" Schmelze) wird von der nachgelieferten Schmelze aus der Plastifiziereinrichtung 2 ausgetrieben und die Nuten in dem Speicherzylinder werden ausgewischt.

Falls in dem Spritzkolben oder in dem Speicherkolben Nuten vorgesehen sind, sollte darauf geachtet werden, dass das hintere Ende der Nuten nicht oder möglichst wenig über die jeweilige Einlassöffnung des ankommenden Schmelzekanals nach hinten hinausragen, da sich sonst Toträume ergeben, die von nachfolgender Schmelze nicht ausgewischt werden können. Daher ist die Länge der Nuten im Spritzkolben in Abstimmung mit dem Hub des Spritzzylinders auszulegen.

Für das zuvor beschriebene Auswischen der Nuten ist es nicht erforderlich, dass der Spritzkolben oder der Speicherkolben mit einer Drehbewegung beaufschlagt wird. Daher können sowohl für den Spritzkolben als auch für den Speicherkolben jeweils ausschießlich Linearantriebe vorgesehen werden.

Während in dem hier beschriebenen Ausführungsbeispiel die Spritzeinheit 1 einen Zwischenspeicher aufweist, kann im Bedarfsfalle auch auf einen Zwischenspeicher verzichtet werden. Beispielweise kann bei besonders kurzen Zykluszeiten auf einen Zwischenspeicher verzichtet und die Schmelze für kurze Zeit in dem Doppelschneckenextruder 2 selbst zwischengespeichert werden. Ferner kann bedarfsweise die Drehzahl des Doppelschneckenextruders 2 reduziert oder dieser gegebenenfalls auch ganz angehalten werden.

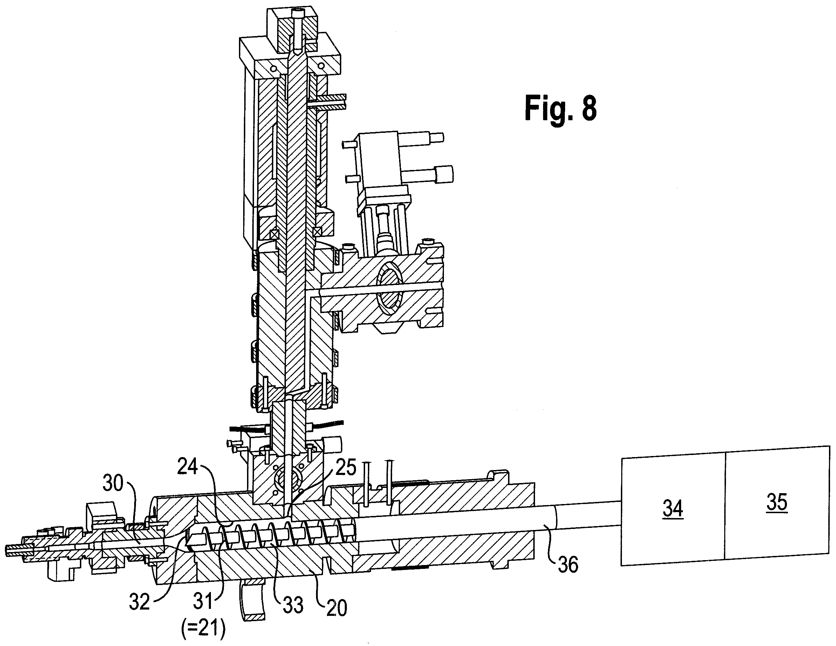

Figur 8 zeigt eine Ausführungsform, bei der der Spritzkolben 21 als Schnecke 31 ausgeführt ist, d.h. der "Spritzkolben" weist eine Nut 33 auf, die einem Schneckengang entspricht. Über eine Schneckenwelle 36 ist die Schnecke 31 antriebstechnisch mit einem Drehantrieb 34 und einem Linearantrieb 35 verbunden. Am vorderen Ende der Schnecke 31, die man auch als Schubschnecke bezeichnen kann, kann im Bedarfsfalle eine Rückströmsperre 32 vorgesehen werden. Es können eine oder mehrere Nuten bzw. Schneckengänge 33 vorgesehen werden, d.h. es kann sich um eine ein- oder mehrgängige Schnecke 31 handeln. Im Bedarfsfalle können zusätzlich zu dem oder den Schneckengängen bzw. Nuten 33 in dem Sprizkolben 21 bzw. der Schnecke 31 noch Nuten 24 in der Innenwand des Spritzzylinders 20 vorhanden sein.

### Bezugszeichenliste

- 1: Spritzeinheit
- 2: Plastifiziereinrichtung bzw. Extruder
- 3: Feststehende Formaufspannplatte
- 4: Bewegliche Formaufspannplatte
- 5a, 5b: Formhälften
- 6: Zwischenspeicher
- 7: Kolbenspritzaggregat
- 8, 9: Schnecken
- 10: Schmelzekanal
- 11: Sperrventil
- 12: Schmelzekanal
- 13: Sperrventil
- 14: Speicherzylinder
- 15: Speicherkolben
- 16: Nut
- 17: Speicherzylinder-Einlassöffnung
- 18: Stirnfläche des Speicherkolbens
- 19: Bodenfläche des Speicherzylinders
- 20: Spritzzylinder
- 21: Spritzkolben
- 22: Kolbenstange
- 23: Kolben-Zylinder-Einheit
- 24: Nut
- 25: Spritzzylinder-Einlassöffnung
- 26: Stirnfläche des Spritzkolbens
- 27: Nut
- 28: Spritzzylinder-Auslassöffnung
- 29: Speicherzylinder-Auslassöffnung
- 30: Schmelze-Einspritzkanal
- 31: Schnecke
- 32: Rückströmsperre
- 33: Nut bzw. Schneckengang
- 34: Drehantrieb
- 35: Linearantrieb
- 36: Schneckenwelle
- 40: Schließeinheit

## Patentansprüche

1. Spritzeinheit (1) einer Spritzgießmaschine mit einer Plastifiziereinrichtung (2) und einem Kolbenspritzaggregat (7), wobei das Kolbenspritzaggregat (7) einen Spritzzylinder (20) und einen darin reversierbar geführten Spritzkolben (21) aufweist, wobei zwischen der Plastifiziereinrichtung (2) und dem Kolbenspritzaggregat (7) ein Zwischenspeicher (6) zur Aufnahme von Schmelze vorgesehen ist, wobei der Zwischenspeicher (6) einen Speicherzylinder (14) und einen darin reversierbar geführten Speicherkolben (15) aufweist, wobei der Speicherzylinder (14) eine Speicherzylinder-Einlassöffnung (25) und eine Speicherzylinder-Auslassöffnung (29) aufweist, wobei eine oder mehrere mit einer Spritzzylinder-Einlassöffnung (25) verbundene und in Richtung des vorderen Endes des Spritzzylinders (20) verlaufende Nuten (24) in der Innenwand des Spritzzylinders (20) vorgesehen sind und/oder wobei eine oder mehrere vom vorderen Ende des Spritzkolbens (21) nach hinten verlaufende und sich bis zur Spritzzylinder-Einlassöffnung (25) erstreckende Nuten (27) in dem Spritzkolben (21) vorgesehen sind, und wobei eine mit der Speicherzylinder-Einlassöffnung (17) verbundene und in Richtung des vorderen Endes des Speicherzylinders (14) verlaufende Nut (16) in der Innenwand des Speicherzylinders (14) vorgesehen ist und/oder wobei eine vom vorderen Ende des Speicherkolbens (15) nach hinten verlaufende und sich bis zur Speicherzylinder-Einlassöffnung (17) erstreckende Nut (27) in dem Speicherkolben (15) vorgesehen ist,
**dadurch gekennzeichnet, dass**
eine einzige Nut (16 oder 27) in der Innenwand des Speicherzylinders (14) oder in dem Speicherkolben (15) vorgesehen ist, dass die Speicherzylinder-Auslassöffnung (29) diametral zum vorderen Ende der Nut (16) angeordnet ist, dass an dem vorderen Ende des Speicherkolbens (15) eine schräge Fläche (18) vorgesehen ist, wobei das in Fließrichtung der Schmelze gesehen hinten liegende Ende der schrägen Fläche (18) im Bereich der einzigen Nut (16) liegt, und dass eine dazu parallele, schräge Fläche (19) am vorderen Ende des Speicherzylinders (14) vorgesehen ist.

2. Spritzeinheit nach Anspruch 1,
**dadurch gekennzeichnet, dass**
eine oder mehrere Nuten (24) in dem Spritzzylinder (20) und/oder eine oder mehrere Nuten (27) in dem Spritzkolben (21) im wesentlichen parallel zur Längsachse von Spritzzylinder (20) und Spritzkolben (21) verlaufen, wobei im Falle mehrerer Nuten (24) im Spritzzylinder (20) diese vorzugsweise äquidistant zueinander über den Umfang des Spritzzylinders (20) verteilt vorgesehen sind und/oder wobei im Falle mehrerer Nuten (27) im Spritzkolben (21) diese vorzugsweise äquidistant zueinander über den Umfang des Spritzkolbens (21) verteilt vorgesehen sind.

3. Spritzeinheit nach Anspruch 1 oder 2,
**dadurch gekennzeichnet, dass**
eine oder mehrere Nuten (24) in dem Spritzzylinder (20) und/oder eine oder mehrere Nuten (27) in dem Spritzkolben (21) wendelförmig um die Längsachse von Spritzzylinder (20) und Spritzkolben (21) verlaufen.

4. Spritzeinheit nach einem der Ansprüche 1 bis 3,
**dadurch gekennzeichnet, dass**
sich die Nuten (24) in der Innenwand des Spritzzylinders (20) von der Spritzzylinder-Einlassöffnung (25) mindestens bis zur vorderen Totpunktlage des Spritzkolbens (21) erstrecken, und dass sich die Nuten (16) in der Innenwand des Speicherzylinders (14) von der Speicherzylinder-Einlassöffnung (17) bis zur vorderen Totpunktlage des Speicherkolbens (15) erstrecken.

5. Spritzeinheit nach einem der Ansprüche 1 bis 4,
**dadurch gekennzeichnet, dass**
sich die Nuten (27) in dem Spritzkolben (21) mindestens von der Spritzzylinder-Einlassöffnung (25) bis zum maximalen Hub des Spritzkolbens (21) erstrecken, und dass sich die Nut (27) in dem Speicherkolben (15) mindestens von der Speicherzylinder-Einlassöffnung (17) bis zum maximalen Hub des Speicherkolbens (15) erstreckt.

6. Spritzeinheit nach einem der Ansprüche 1 bis 5,
**dadurch gekennzeichnet, dass**
an dem vorderen Ende des Spritzkolbens (21) eine oder mehrere schräge Flächen (26) vorgesehen sind, wobei das in Spritzrichtung hinten liegende Ende einer schrägen Fläche (26) im Bereich einer Nut (24, 27) liegt.

7. Spritzeinheit nach einem der Ansprüche 1 bis 6,
**dadurch gekennzeichnet, dass**
ein von einer Spritzzylinder-Auslassöffnung (28) ausgehender im wesentlichen zylindrischer Schmelze-Einspritzkanal (30) vorgesehen ist, wobei die Zylinderachse des Schmelze-Einspritzkanals (30) von der Zylinderachse des Spritzzylinders (20) beabstandet ist.

8. Spritzeinheit nach Anspruch 7,
**dadurch gekennzeichnet, dass**
die Querschnittsfläche des Schmelze-Einspritzkanals (30) innerhalb der Querschnittsfläche des Spritzkolbens (21) liegt, wobei vorzugsweise die den Schmelze-Einspritzkanal (30) begrenzende Wand und die Innenwand des Spritzzylinders (20) auf einer Linie (L) liegen.

9. Spritzeinheit nach einem der vorstehenden Ansprüche,
**dadurch gekennzeichnet, dass**
die Nut (16) in dem Speicherzylinder (14) und/oder die Nut (27) in dem Speicherkolben (15) wendelförmig um die Längsachse von Speicherzylinder (14) und Speicherkolben (15) verlaufen.

10. Spritzeinheit nach einem der vorstehenden Ansprüche,
**dadurch gekennzeichnet, dass**
ein von der Speicher-Auslassöffnung (29) zur Spritzzylinder-Einlassöffnung (25) verlaufender im wesentlichen zylindrischer Schmelzekanal (12) vorgesehen ist, wobei die Zylinderachse des Schmelzekanals (12) von der Zylinderachse des Speicherzylinders (14) beabstandet ist.

11. Spritzeinheit nach Anspruch 10,
**dadurch gekennzeichnet, dass**
dass die Querschnittsfläche des Schmelzekanals (12) innerhalb der Querschnittsfläche des Speicherkolbens (15) liegt, wobei vorzugsweise die den Schmelzekanal (12) begrenzende Wand und die Innenwand des Speicherzylinders (14) auf einer Linie (L) liegen.

12. Spritzeinheit nach einem der vorstehenden Ansprüche,
**dadurch gekennzeichnet, dass**
eine einzige Nut in der Innenwand des Spritzzylinders (20) oder in dem Spritzkolben (15) vorgesehen ist und dass die Spritzzylinder-Auslassöffnung (28) diametral zum vorderen Ende der Nut (24) angeordnet ist.

13. Spritzeinheit nach einem der vorstehenden Ansprüche,
**dadurch gekennzeichnet, dass**
für den Spritzkolben (21) ein Dreh- (34) und ein Linearantrieb (35) und in dem Spritzkolben (21) eine oder mehrere wendelförmige Nuten (33) bzw. Schneckengänge (33) vorgesehen sind, so dass der Spritzkolben (21) als Schubschnecke (31) ausgebildet ist, wobei vorzugsweise eine Rückströmsperre (32) am vorderen Ende der Schubschnecke (31) vorgesehen ist.

## Claims

1. An injection unit (1) of an injection moulding machine with a plasticizing unit (2) and a ram injection assembly (7), wherein the ram injection assembly (7) has an injection cylinder (20) and an injection ram (21) that is guided therein in a reversible manner, wherein between the plasticizing unit (2) and the ram injection assembly (7) an intermediate accumulator (6) is provided for the reception of melt, wherein the intermediate accumulator (6) has an accumulator cylinder (14) and an accumulator ram (15) that is guided therein in a reversible manner, wherein the accumulator cylinder (14) has an accumulator cylinder intake opening (25) and an accumulator cylinder outlet opening (29), wherein one or several grooves (24) that are connected with an injection cylinder intake opening (25) and run in the direction of the front end of the injection cylinder (20) are provided in the interior wall of the injection cylinder (20) and/or wherein one or several grooves (27) that run from the front end of the injection ram (21) towards the back and that extend to the injection cylinder intake opening (25) are provided in the injection ram (21), and wherein a groove (16) that is connected with an accumulator cylinder intake opening (17) and that runs in the direction of the front end of the accumulator cylinder (14) is provided in the interior wall of the accumulator cylinder (14), and/or wherein a groove (27) that runs from the front end of the accumulator ram (15) towards the back and that extends to the accumulator cylinder intake opening (17) is provided in the accumulator ram (15),
**characterized in that**
a single groove (16 or 27) is provided in the interior wall of the accumulator cylinder (14) or in the accumulator ram (15), that the accumulator cylinder outlet opening (29) is arranged diametrically to the front end of the groove (16), and that at the front end of the accumulator ram (15) an oblique surface (18) is provided, wherein the rear end of the oblique surface (18), viewed in the flow direction of the melt, lies in the region of the single groove (16), and that an oblique surface (19), parallel thereto, is provided at the front end of the accumulator cylinder.

2. The injection unit according to Claim 1,
**characterized in that**
one or several grooves (24) in the injection cylinder (20) and/or one or several grooves (27) in the injection ram (21) run essentially parallel to the longitudinal axis of the injection cylinder (20) and injection ram (21), wherein in the case of several grooves (24) in the injection cylinder (20) these are preferably provided distributed equidistant to one another over the circumference of the injection cylinder (20) and/or wherein in the case of several grooves (27) in the injection ram (21), these are preferably provided distributed equidistant to one another over the circumference of the injection ram (21) .

3. The injection unit according to Claim 1 or 2,
**characterized in that**
one or several grooves (24) in the injection cylinder (20) and/or one or several grooves (27) in the injection ram (21) run helically about the longitudinal axis of injection cylinder (20) and injection ram (21).

4. The injection unit according to one of Claims 1 to 3,
**characterized in that**
the grooves (24) extend in the interior wall of the injection cylinder (20) from the injection cylinder intake opening (25) at least to the front dead centre position of the injection ram (21), and that the grooves (16) in the interior wall of the accumulator cylinder (14) extend from the accumulator cylinder intake opening (17) to the front dead centre position of the accumulator ram (15).

5. The injection unit according to one of Claims 1 to 4,
**characterized in that**
the grooves (27) in the injection ram (21) extend at least from the injection cylinder intake opening (25) to the maximum stroke of the injection ram (21), and that the groove (27) in the accumulator ram (15) extends at least from the accumulator cylinder intake opening (17) to the maximum stroke of the accumulator ram (15).

6. The injection unit according to one of Claims 1 to 5,
**characterized in that**
at the front end of the injection ram (21) one or several oblique surfaces (26) are provided, wherein the rear end, in the injection direction, of an oblique surface (26) lies in the region of a groove (24, 27).

7. The injection unit according to one of Claims 1 to 6,
**characterized in that**
an essentially cylindrical melt-injection channel (30) is provided, that originates from an injection cylinder outlet opening (28), wherein the cylinder axis of the melt-injection channel (30) is spaced apart from the cylinder axis of the injection cylinder (20) .

8. The injection unit according to Claim 7,
**characterized in that**
the cross-sectional area of the melt-injection channel (30) lies within the cross-sectional area of the injection ram (21), wherein preferably the wall that delimits the melt-injection channel (30) and the interior wall of the injection cylinder (20) lie on a line (L).

9. The injection unit according to one of the preceding claims,
**characterized in that**
the groove (16) in the accumulator cylinder (14) and/or the groove (27) in the accumulator ram (15) run helically about the longitudinal axis of accumulator cylinder (14) and accumulator ram (15).

10. The injection unit according to one of the preceding claims,
**characterized in that**
an essentially cylindrical melt channel (12) is provided, running from the accumulator outlet opening (29) to the injection cylinder intake opening (25), wherein the cylinder axis of the melt channel (12) is spaced apart from the cylinder axis of the accumulator cylinder (14).

11. The injection unit according to Claim 10,
**characterized in that**
the cross-sectional area of the melt channel (12) lies within the cross-sectional area of the accumulator ram (15), wherein preferably the wall that delimits the melt channel (12) and the interior wall of the accumulator cylinder (14) lie on a line (L).

12. The injection unit according to one of the preceding Claims,
**characterized in that**
a single groove is provided in the interior wall of the injection cylinder (20) or in the injection ram (15), and that the injection cylinder outlet opening (28) is arranged diametrically to the front end of the groove (24).

13. The injection unit according to one of the preceding claims,
**characterized in that**
for the injection ram (21) a rotational- (34) and a linear drive (35) and in the injection ram (21) one or several helical grooves (33) or respectively worm gears (33) are provided, so that the injection ram (21) is configured as a thrust screw (21), wherein preferably a back flow barrier (32) is provided at the front end of the thrust screw (31).

## Revendications

1. Unité d'injection (1) d'une machine de moulage par injection comprenant un dispositif de plastification (2) et un groupe d'injection à pistons (7), dans lequel le groupe d'injection à pistons (7) comprend un cylindre d'injection (20) et un piston d'injection (21) guidé à l'intérieur de manière réversible, dans lequel un réservoir intermédiaire (6) pour recevoir de la masse fondue est prévu entre le dispositif de plastification (2) et le groupe d'injection à pistons (7), dans lequel le réservoir intermédiaire (6) présente un cylindre de réservoir (14) et un piston de réservoir (15) guidé à l'intérieur de manière réversible, dans lequel le cylindre de réservoir (14) présente une ouverture d'admission (25) de cylindre de réservoir et une ouverture de sortie (29) de cylindre de réservoir, dans lequel une ou plusieurs rainure(s) (24) reliée(s) à une ouverture d'admission (25) de cylindre de réservoir et allant en direction de l'extrémité avant du cylindre d'injection (20) est/sont prévue(s) dans la paroi intérieure du cylindre d'injection (20) et/ou dans lequel une ou plusieurs rainure(s) (27) allant de l'extrémité avant du piston d'injection (21) vers l'arrière et s'étendant jusqu'à l'ouverture d'admission (25) de cylindre de réservoir est/sont prévue(s) dans le cylindre d'injection (21), et dans lequel une rainure (16) reliée à l'ouverture d'admission (17) du cylindre de réservoir et allant en direction de l'extrémité avant du cylindre de réservoir (14) est prévue dans la paroi intérieure du cylindre de réservoir (14) et/ou dans lequel une rainure (27) allant de l'extrémité avant du piston de réservoir (15) et s'étendant jusqu'à l'ouverture d'admission (17) de cylindre de réservoir est prévue dans le piston de réservoir (15), **caractérisée en ce**
**qu'**une unique rainure (16 ou 27) est prévue dans la paroi intérieure du cylindre de réservoir (14) ou dans le piston de réservoir (15), que l'ouverture de sortie (29) de cylindre de réservoir est disposée diamétralement à l'extrémité avant de la rainure (16), que sur l'extrémité avant du piston de réservoir (15), une face biseautée (18) est prévue, dans lequel l'extrémité de la face biseautée (18) placée en arrière vue dans le sens d'écoulement de la masse fondue, repose au niveau de l'unique rainure (16), et qu'une face biseautée (19) parallèle à celle-ci est prévue sur l'extrémité avant du cylindre de réservoir (14) .

2. Unité d'injection selon la revendication 1, **caractérisée en ce qu'**une ou plusieurs rainure(s) 24) dans le cylindre d'injection (20) et/ou une ou plusieurs rainure(s) (27) dans le piston d'injection (21) est/sont essentiellement parallèle(s) à l'axe longitudinal du cylindre d'injection (20) et du piston d'injection (21), dans lequel dans le cas de plusieurs rainures (24) dans le cylindre d'injection (20), celles-ci sont prévues réparties de préférence équidistantes entre elles sur le pourtour du cylindre d'injection (20) et/ou dans lequel dans le cas de plusieurs rainures (27) dans le cylindre d'injection (21), celles-ci sont prévues réparties de préférence équidistantes entre elles sur le pourtour du cylindre d'injection (21).

3. Unité d'injection selon la revendication 1 ou 2, **caractérisée en ce qu'**une ou plusieurs rainure(s) 2(4) dans le cylindre d'injection (20) et/ou une ou plusieurs rainure(s) (27) dans le piston d'injection (21) est/sont en spirale sur l'axe longitudinal du cylindre d'injection (20) et du piston d'injection (21) .

4. Unité d'injection selon l'une des revendications 1 à 3, **caractérisée en ce que** les rainures (24) dans la paroi intérieure du cylindre d'injection (20) s'étendent de l'ouverture d'admission (25) de cylindre de réservoir au moins jusqu'au point mort haut avant du piston d'injection (21) et que les rainures (16) dans la paroi intérieure du cylindre de réservoir (14) s'étendent de l'ouverture d'admission (17) du cylindre de réservoir jusqu'au point mort haut avant du piston de réservoir (15).

5. Unité d'injection selon l'une des revendications 1 à 4, **caractérisée en ce que** les rainures (27) dans le piston d'injection (21) s'étendent au moins de l'ouverture d'admission (25) de cylindre de réservoir jusqu'à la course maximale du piston d'injection (21) et que la rainure (27) dans le piston de réservoir (15) s'étend au moins de l'ouverture d'admission (17) du cylindre de réservoir jusqu'à la course maximale du piston de réservoir (15).

6. Unité d'injection selon l'une des revendications 1 à 5, **caractérisée en ce qu'**une ou plusieurs face(s) biseautée(s) (26) est/sont prévue(s) à l'extrémité avant (21) du piston d'injection (15), dans lequel l'extrémité d'une face biseautée (26) reposant en arrière dans le sens d'injection est au niveau d'une rainure (24, 27).

7. Unité d'injection selon l'une des revendications 1 à 6, **caractérisée en ce qu'**un canal d'injection de masse fondue (30) essentiellement cylindrique, partant d'une ouverture de sortie (28) de cylindre d'injection est prévu, dans lequel l'axe de cylindre du canal d'injection de masse fondue (30) est distant de l'axe de cylindre du cylindre d'injection (20).

8. Unité d'injection selon la revendication 7, **caractérisé en ce que** la surface transversale du canal d'injection de masse fondue (30) est à l'intérieur de la surface transversale du piston d'injection (21), dans lequel de préférence, la paroi délimitant le canal d'injection de masse fondue (30) et la paroi intérieure du cylindre d'injection (20) reposent sur une ligne (L).

9. Unité d'injection selon l'une des revendications précédentes, **caractérisée en ce que** la rainure (16) dans le cylindre de réservoir (14) et/ou la rainure (27) dans le piston de réservoir (15) est/sont en spirale sur l'axe longitudinal du cylindre de réservoir (14) et du piston d'injection (15).

10. Unité d'injection selon l'une des revendications précédentes, **caractérisée en ce qu'**un canal de masse fondue (12) essentiellement cylindrique allant de l'ouverture de sortie (29) de réservoir à l'ouverture d'admission (25) de cylindre de réservoir est prévu, dans lequel l'axe de cylindre du canal de masse fondue (12) est distant de l'axe de cylindre du cylindre de réservoir (14).

11. Unité d'injection selon la revendication 10, **caractérisé en ce que** la surface transversale du canal de masse fondue (12) est à l'intérieur de la surface transversale du piston de réservoir (15), dans lequel de préférence, la paroi délimitant le canal de masse fondue (12) et la paroi intérieure du cylindre de réservoir (14) reposent sur une ligne (L).

12. Unité d'injection selon l'une des revendications précédentes, **caractérisée en ce qu'**une unique rainure est prévue dans la paroi intérieure du cylindre d'injection (20) ou dans le piston d'injection (15) et que l'ouverture de sortie (28) de cylindre d'injection est disposée diamétralement à l'extrémité avant de la rainure (24).

13. Unité d'injection selon l'une des revendications précédentes, **caractérisée en ce que** sont prévus pour le piston d'injection (21), un entraînement rotatif (34) et un entraînement linéaire (35) et dans le piston d'injection (21), une ou plusieurs rainure(s) (33) spiralées, respectivement spires, de sorte que le piston d'injection (21) est conçu en tant que vis-piston (31), dans lequel de préférence, un clapet anti-retour (32) est prévu sur l'extrémité avant de la vis-piston (31).
